Europäisches Patentamt

European Patent Office

Office européen des brevets

(19)

(11) **EP 0 780 793 B1**

(12) **EUROPÄISCHE PATENTSCHRIFT**

(45) Veröffentlichungstag und Bekanntmachung des Hinweises auf die Patenterteilung:
**15.05.2002   Patentblatt 2002/20**

(51) Int Cl.7: **G06T 7/20**

(21) Anmeldenummer: **96119566.6**

(22) Anmeldetag: **05.12.1996**

(54) **Verfahren zur rechnergestützten Bewegungsschätzung für Bildpunkte zeitlich aufeinanderfolgender Bilder einer Videosequenz**

Motion estimation process with a calculator for successive image points of a video sequence

Procédé d'estimation de mouvement par calculateur pour des points d'images successives d'une séquence vidéo

(84) Benannte Vertragsstaaten:
**DE FR GB IT**

(30) Priorität: **22.12.1995  DE 19548451**

(43) Veröffentlichungstag der Anmeldung:
**25.06.1997   Patentblatt 1997/26**

(73) Patentinhaber: **Infineon Technologies AG**
**81669 München (DE)**

(72) Erfinder: **Panis, Stathis, Dr.**
**80803 München (DE)**

(74) Vertreter: **Reinhard - Skuhra - Weise & Partner**
**Postfach 44 01 51**
**80750 München (DE)**

(56) Entgegenhaltungen:
**EP-A- 0 158 984**

• **TOM B C S ET AL: "MOTION ESTIMATION OF SKELETONIZED ANGIOGRAPHIC IMAGES USING ELASTIC REGISTRATION" IEEE TRANSACTIONS ON MEDICAL IMAGING, Bd. 13, Nr. 3, 1. September 1994, Seiten 450-460, XP000474135**
• **Geiger D et al., "Occlusions and Binocular Stereo", International Journal of Computer Vision, Bd. 14, Nr. 3, Seiten 211-226, Kluwer Academic Publishers, April 1995**

**Beschreibung**

Im Bereich der blockbasierten Bildcodierungsverfahren oder auch der objektbasierten Bildcodierungsverfahren ist eine qualitativ hochwertige Bewegungsschätzung für die Blöcke bzw. Objekte der einzelnen Bilder einer Videosequenz von entscheidender Bedeutung, um bei einer möglichst hohen Einsparung benötiger Übertragungskapazität eine hohe Qualität der rekonstruierten Bilder bei dem Empfänger des Videodatenstroms zu erzielen.

Durch die Bewegungsschätzung wird es möglich, anstatt der Codierung der Luminanzinformation und/oder der Chrominanzinformation der einzelnen Bildpunkte (Pixel) der Bilder einer Videosequenz codieren zu müssen, nur die Form bestimmter Blöcke bzw. nur die Form bestimmter Objekte sowie weitere Informationen bzgl. der Blöcke bzw. der Objekte zwischen zwei aufeinanderfolgenden Bildern zu codieren und an den Empfänger zu übertragen.

Weitere Informationen können beispielsweise beinhalten die Verschiebung dieser Blöcke bzw. Objekte zwischen zwei aufeinanderfolgenden Bildern.

Mit dieser blockbasierten bzw. objektbasierten Codierung wird eine erhebliche Einsparung an benötiger Übertragungskapazität erreicht.

Grundlagen über Bewegungsschätzung bei blockbasierten Bildcodierungsverfahren sind beispielsweise in folgenden Dokumenten zu finden: R. Mester und M. Hötter, Zuverlässigkeit und Effizienz von Verfahren zur Verschiebungsvektorschätzung, Mustererkennung, 1995, Informatik Aktuell, Springer Verlag, S. 285-294; Liu et al, Method and Apparatus for determining motion vectors for image sequences, US-Patent-Nr. 5,398,068, 1995; F. Dufaux und F. Moscheni, Motion Techniques for digital TV: A Review and a New Contribution, Proceedings of the IEEE, Vol. 83, Nr. 6, S. 858 bis 876, Juni 1995.

Ein dynamisches Programmierungs-Verfahren ist bekannt (H. Sakoe et al, Dynamic Programming Algorithm Optimization for Spoken Word Recognition, IEEE Transactions, Vol. ASSP-26, No. 1, S. 43 bis 49, 1978).

Weiterhin ist der Einsatz des dynamischen Programmierungs-Verfahrens (Dynamic Programming Algorithmus, DP-Verfahren) in der Bildverarbeitung und insbesondere im Zusammenhang mit der sogenannten Stereo Correspondence bekannt (D. Geiger et al, Occlusions and Binocular Stereo, Intern. Journal of Computer Vision, No. 14, Kluwer Academic Publishers, Boston, S. 211 bis 226, 1995).

D. Geiger et al. offenbaren einen Lösungsansatz für das Problem von Verdeckungen bei binokularen Stereoverfahren (binocolar Stereo), bei denen Tiefeninformationen einer betrachteten Szene durch ein Kamerapaar erhalten werden. Dabei werden Verdeckungen in einem Übereinstimmungsraum (Matching Space) beschrieben, der die Übereinstimmung zwischen einem Pixel in einem linken Bild und in einem rechten Bild des Stereobilds bestimmt.

Lösungen für das Übereinstimmungsproblem werden als Wege in einem sogenannten Disparitätsfeld betrachtet, das alle relevanten Paarungen von Pixeln des linken und rechten Bildes enthält und damit den Suchraum für das eingesetzte DP-Verfahren aufspannt. Um die Anzahl möglicher Lösungen *a priori* zu reduzieren, wird eine Monotoniebedingung eingeführt. Diese beschränkt die Suche auf solche Wege, die nicht gleichzeitig im linken und im rechten Bild Sprünge enthalten. Unter diesen Wegen wiederum wird derjenige als Lösung bestimmt, der eine gegebene Kostenfunktion minimiert, welche erfordert, das gepaarte Pixel möglichst weitgehend miteinander übereinstimmen.

Der vorgeschlagene Lösungsansatz erreicht eine qualitativ gute Bewegungsschätzung für die Bildpunkte innerhalb eines Objekts, ist jedoch vor allem für Bildpunkte an den Kanten von Objekten unzureichend, da diese Bildpunkte bei diesem Verfahren nicht als Objektkantenpunkte klassifiziert werden, sondern fälschlicherweise als Verdeckungen. Außerdem können bei dem beschriebenen Lösungsansatz lediglich eindimensionale Verschiebungen, d. h. zwischen dem linken und dem rechten Bild bedingt durch den Augenabstand, und keine zweidimensionale z.B. vertikale und horizontale, Bewegungen berücksichtigt werden.

Ein weiteres Verfahren, das zur Bewegungsschätzung den DP-Algorithmus im Rahmen der sogenannten Stereo Correspondence den DP-Algorithmus verwendet, ist bekannt (I. Cox et al, Stereo Without Regularization, NEC Research Institute, Princeton, NJ 08540, S. 1-31, 1992).

Die beiden im vorigen beschriebenen Verfahren weisen weiterhin den Nachteil auf, daß das DP-Verfahren nur in einem zweidimensionalen Optimierungsraum durchgeführt wird. Dies bedeutet, daß nur die Bewegung von Objekten in eine Richtung zuverlässig erkannt wird, beispielsweise in Richtung der untersuchten Scanlinie. Bewegt sich jedoch ein Objekt schnell in eine andere Richtung, so kann es dazu kommen, wie im weiteren beschrieben wird, daß das Objekt nicht mehr durch das DP-Verfahren "gefunden wird", und somit den einzelnen Bildpunkten durch dieses Verfahren fehlerhafte Bewegungsvektoren zugeordnet werden.

Somit liegt der Erfindung das Problem zugrunde, ein Verfahren zur Bewegungsschätzung anzugeben, das auch den einzelnen Bildpunkten an Objektkanten der Bilder der Videosequenz korrekte Bewegungsvektoren zugeordnet werden.

Das Problem wird mit dem Verfahren gemäß Patentanspruch 1 gelöst.

Hierbei wird für den DP-Algorithmus eine Kostenfunktion für jeden einzelnen Bildpunkt verwendet, deren Wert erhöht wird bei wachsenden Unterschieden von Werten der Bewegungsvektoren von Bildpunkten , die sich nebeneinander auf einer Scan Linie befinden und deren Wert erniedrigt wird bei wachsenden Luminanzgradienten der einzelnen Bildpunkte.

Damit wird erreicht, daß die Bewegungsschätzung für die Bildpunkte erheblich verbessert wird, da die Optimierung nicht mehr global entlang der Scanlinie durchgeführt wird, sondern durch den zusätzlichen Term dafür gesorgt wird, daß eine Optimierung innerhalb der einzelnen Objekte durchgeführt wird. Dies bedeutet, daß nunmehr auch Kanten von Objekten bei der Optimierung durch das DP-Verfahren berücksichtigt werden.

Vorteilhafte Weiterbildungen der Erfindung ergeben sich aus den abhängigen Ansprüchen.

Vorteilhaft für das Verfahren ist, für DP-Algorithmus einen dreidimensionalen Optimierungsbereich, auch Suchbereich genannt, zu verwenden.

Diese drei Dimensionen sind:

- die Scanlinie, entlang der die Bewegungsschätzung durchgeführt wird,

- Werte für Bewegungsvektoren in einer ersten Richtung, und

- Werte für Bewegungsvektoren einer zweiten Richtung, die ungleich der ersten Richtung ist.

Durch diese Erweiterung des Optimierungsraums für den DP-Algorithmus ist es nun auch möglich, Objekte, die zwischen zwei zeitlich aufeinander folgenden Bildern in einer zu der ersten Richtung unterschiedlichen zweiten Richtung stark verschoben werden, noch zu erkennen und die Bewegungsschätzung für die einzelnen Bildpunkte somit korrekt durchführen zu können.

Damit werden Fehlklassifikationen von Gebieten als Verdeckungen, wie dies bei den bekannten Verfahren unausweichlich ist, vermieden.

Hierbei wird die Regularisation jedoch nicht entlang der Scanlinie als Ganzes durchgeführt, sondern die Scanlinie wird in einzelne Segmente unterteilt abhängig davon, ob eine Kante eines Objekts detektiert wird oder nicht. Wenn ein Bildpunkt der Scanlinie als Kantenpunkt mit einem daraus resultierenden erhöhten Wert des Luminanzgradienten des jeweiligen Bildpunktes klassifiziert wird, wird der Einfluß des erhöhten Luminanzgradienten des Bildpunkts auf den Teil der Kostenfunktion des DP-Algorithmus, der zur Regularistion dient, "gedämpft". Dadurch wird die Scanlinie in Segmente aufgeteilt, die den einzelnen Objekten, die durch Kanten voneinander abgegrenzt sind, entsprechen.

Eine weitere vorteilhafte Weiterbildung des Verfahrens liegt darin, daß für das sog. Matching eines Bildpunktes zweier zeitlicher aufeinanderfolgender Bilder ein Gebiet verwendet wird, welches rechteckige oder quadratische Form aufweist. In diesem, den jeweiligen Bildpunkt umgebenden Gebiet, werden die Luminanzwerte der einzelnen Bildpunkte, die sich innerhalb dieses Gebiets befinden, addiert, normiert, und miteinander verglichen.

Ein Ausführungsbeispiel der Erfindung ist in den Zeichnungen dargestellt und wird im folgenden näher beschrieben.

Es zeigen

Figur 1          ein Diagramm, in dem das DP-Verfahren in Form einer Skizze beschrieben wird;

Figur 2          eine Darstellung mehrerer Funktionen, die im Rahmen zusätzlicher Summanden für die im weiteren beschriebenen Kostenfunktionen verwendet werden können;

Figur 3          eine Darstellung einer Funktion, die sich als zusätzlicher Summand in der Kostenfunktion besonders eignet;

Figuren 4a und 4b          in Form einer Skizze zwei zeitlich aufeinanderfolgender Bilder mit zwei Objekten A und B, wobei ein Objekt A in einer zweiten Richtung verschoben wird (Figur 4b), wodurch das Problem, das der Erfindung zugrunde liegt, verdeutlicht wird;

Figuren 5a und 5b          zwei Skizzen, in denen das Ergebnis des DP-Verfahrens angewendet auf die in Figur 4 dargestellten Objekte A und B, zum einen mit einem bekannten Verfahren (Figur 5a), bei dem eine Verdeckung ermittelt wird, und ein Ergebnis des DP-Verfahrens gemäß dem erfindungsgemäßen Verfahren mit einer zusätzlichen "Suchrichtung" in dem Optimierungsraum des DP-Verfahrens (Figur 5b), wodurch die falsche Klassifikation vermieden wird und das Objekt A in korrekter Weise klassifiziert wird;

Figuren 6a und 6b          zwei Skizzen, in dem ein Gebiet, daß das jeweils zu untersuchende Pixel umschließt, in einem ersten Bild (Figur 6a) und in einem dem ersten Bild zeitlich nachfolgenden Bild um einen Bewegungsvektor (d1, d2), der die angenommenen Verschiebungen des Bildpunktes aus Figur 6a bezüglich der ersten Richtung und der zweiten Richtung beschreibt (Figur 6b), darstellt;

Figur 7                          ein Ablaufdiagramm, in dem einzelne Verfahrensschritte des erfindungsgemäßen Verfahrens dargestellt sind.

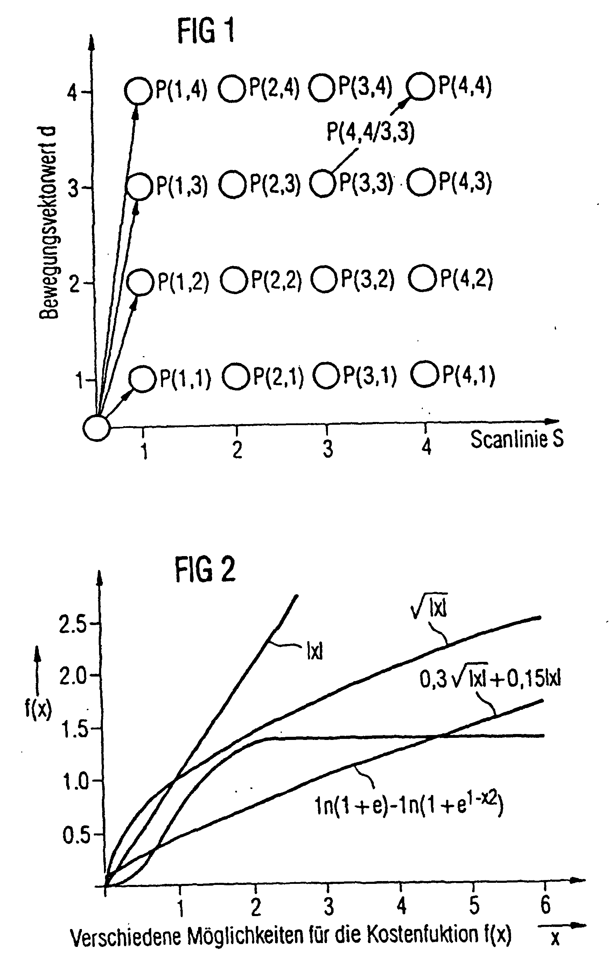

Anhand der Figuren 1 bis 7 wird das erfindungsgemäße Verfahren weiter erläutert.

**Dynamische Programmierung**

Das grundlegende Verfahren der dynamischen Programmierung ist erläutert in H.Sakoe et al, Dynamic Programming Optimisation for Spoken Word Recognition, IEEE Transactions, Vol. ASSP-26, No. 1, S. 43 bis 49, 1978.

Übertragen auf die Bildverarbeitung und speziell übertragen auf die Bewegungsschätzung hat das Verfahren der dynamischen Programmierung zum Ziel, die größtmögliche Übereinstimmung einer Scanlinie von einem ersten Bild mit einem Bereich eines zeitlich dem ersten Bild nachfolgenden zweiten Bildes in der Videosequenz zu ermitteln und dadurch eine Bewegungsschätzung für die sich auf der jeweiligen Scanlinie befindenden Bildpunkte durchzuführen.

Das Verfahren der dynamischen Programmierung ist ein Optimierungsverfahren, welches zur Ermittlung einer optimalen Lösung a priori statistische Information sowie bestimmte Ermittlungsregeln benötigt.

Eine Wahrscheinlichkeit $P(n-1, d)$ bezeichnet die Wahrscheinlichkeit, daß ein erster Bildpunkt $n-1$ auf einer Rasterlinie einen Bewegungsvektorwert $d$ aufweist.

Eine bedingte Wahrscheinlichkeit $P(n, d'|n-1, d)$ bezeichnet die Wahrscheinlichkeit, daß ein zweiter Bildpunkt $n$ einen weiteren Bewegungsvektorwert $d'$ aufweist unter der Bedingung, daß der erste Bildpunkt $n-1$ den Bewegungsvektorwert $d$ aufweist.

Hierbei kann der weitere Bewegungsvektorwert $d'$ gleich oder ungleich dem Bewegungsvektorwert $d$ sein.

Es ist zu bemerken, daß die im vorigen beschriebenen Wahrscheinlichkeiten für alle Bildpunkte und alle den Bildpunkten zugeordneten Bewegungsvektorwerten gelten. Der erste Bildpunkt $n-1$ und der zweite Bildpunkt $n$ sind zwei benachbarte, sich auf derselben Rasterlinie befindliche Bildpunkte.

Wenn diese bedingten Wahrscheinlichkeiten für jeden Bildpunkt einer Scanlinie, nach deren Verlauf das dynamische Programmier-Verfahren durchgeführt wird, bekannt ist, kann dies zu einem Optimierungsproblem formuliert werden, welches durch das dynamische Programmierungs-Verfahren gelöst werden kann.

Die Ermittlung der bedingten Wahrscheinlichkeiten für die einzelnen Bildpunkte und deren zugeordneten Bewegungsvektorwerten wird im weiteren erläutert.

In Figur 1 als kleines prinzipielles Beispiel über einer Scanlinie S, die N Bildpunkte aufweist, wobei der Index $n$ zur Bezeichnung der einzelnen Bildpunkte in dem Intervall [0..N] liegt, sind für jeden Bildpunkt der sich auf der Scanlinie S befindet, mögliche Bewegungsvektorwerte $d$ aufgetragen, die dem jeweiligen Bildpunkt zugeordnet werden können.

In Figur 1 ist zur Vereinfachung $N = 4$ gewählt und es sind auch nur 4 mögliche Bewegungsvektorwerte für die einzelnen vier Bildpunkte der Scanlinie S dargestellt.

Es ist zu bemerken, daß dies nur ein sehr einfaches Beispiel ist, daß lediglich das Verständnis des Verfahrens der dynamischen Programmierung erleichtern soll und die Allgemeingültigkeit des Verfahrens in keinster Weise einschränkt.

Für jeden Bildpunkt in Figur 1 ist weiterhin jeweils die Wahrscheinlichkeit eingetragen, daß der jeweilige Bildpunkt $n$ den entsprechenden Bewegungsvektorwert $d$ aufweist. Beispielsweise ist die Wahrscheinlichkeit, daß der Bildpunkt $n = 2$ den Bewegungsvektorwert $d = 3$ aufweist mit $P(2, 3)$ bezeichnet.

Weiterhin wird für jeden Bildpunkt die jeweilige bedingte Wahrscheinlichkeit für den nachfolgenden Bildpunkt ermittelt. Diese Wahrscheinlichkeit ist in Figur 1 beispielsweise durch $P(4, 4|3, 3)$ dargestellt, wodurch die Wahrscheinlichkeit angegeben ist, daß der Bildpunkt $n = 4$ den weiteren Bewegungsvektorwert $d' = 4$ aufweist, unter der Bedingung, daß der Bildpunkt $n = 3$ $(n-1)$ den Bewegungsvektorwert $d = 3$ aufweist.

Die Ermittlung der bedingten Wahrscheinlichkeit für die einzelnen Bildpunkte und den zugeordneten Bewegungsvektorwerten wird im weiteren noch detailliert erläutert.

Aus den einzelnen Wahrscheinlichkeiten und den einzelnen bedingten Wahrscheinlichkeiten wird eine Bewertung C ermittelt, welche ein Maß darstellt für die jeweilige Auftretenswahrscheinlichkeit des gesamten Pfades, also der Kombination der einzelnen Zuordnung der Bewegungsvektorwerten zu den jeweiligen Bildpunkten.

Das Maximum der Bewertung C ergibt dann die größte Übereinstimmung der jeweiligen Bildpunkte der Scanlinie zwischen den beiden zeitlich aufeinanderfolgenden Bildern.

Die Bewertung C erfolgt auf folgende Weise:

$$C = \max\left(\sum_{n=0}^{N} P(n, d'|n-1, d) \cdot P(n, d')\right) \qquad (1)$$

Bei der Durchführung des dynamischen Programmierungsverfahrens ist es nur nötig, daß ein Pfad von einem Startpunkt zu einem gesuchten Endpunkt berücksichtigt werden muß.

In dem in Figur 1 dargestellten Beispiel bedeutet dies, daß die restlichen 15 möglichen Pfade bei 16 möglichen Pfaden nicht berücksichtigt werden müßten. Mit D(i, j) wird jeweils der maximale Wert der Bewertung C für einen Pfad von i-Vektoren, die in dem Bildpunkt j enden, bezeichnet.

D(i,j) wird rekursiv nach folgender Vorschrift bestimmt (speziell für das in Figur 1 dargestellte Beispiel) :

$$D(i, j) = \max_{1 \leq k \leq 4}\left[D(i-1, k) + P(j|k) \cdot P(j, i)\right] \qquad (2)$$

Hierbei wird mit einem Index k der jeweilige Bewegungsvektorwert, der dem Bildpunkt j zugeordnet wird, bezeichnet.

Für den in Figur 1 speziellen Fall bedeutet dies für einen Pfad, der beispielsweise in dem Bildpunkt n = 3 endet:

$$D(4, 3) = \max_{1 \leq k \leq 4}\left[D(3, k) + P(3|k) \cdot P(3, 4)\right] \qquad (3)$$

Die Rekursionsformel (2) wird nun für eine Pfadlänge von n Vektoren durchgeführt, wobei das Verfahren örtlich für die Bildpunkte des jeweiligen Bildes von links nach rechts unter der Annahme durchgeführt wird, daß alle Scanlinien bei einem "0ten" Bildpunkt n = 0 beginnt,.

Um das global beste Muster zu bestimmen, also um den besten Pfad zu bestimmen, muß dieser Pfad auch zurückverfolgt werden können. Hierfür ist es nötig, daß jeweils der optimale Vorgänger eines Bildpunkts und dem diesem Bildpunkt zugeordneten Bewegungsvektor zu jedem Vektor in einem Gesamtpfad wiedergefunden werden kann. Dies wird erreicht, indem jeweils der optimale Vorgänger markiert und gespeichert wird. Damit wird das sogenannte Backtracking zur Bestimmung der optimalen Gesamtzuordnung der Bewegungsvektorwerte zu den Bildpunkten der Scanlinie S erzielt.

Die Größe des Wertebereichs der Bewegungsvektorwerte d ist von entscheidender Bedeutung für die Geschwindigkeit, mit der das dynamische Programmierungsverfahren durchgeführt werden kann. Dieser Suchbereich wird üblicherweise durch bestimmte Annahmen beschränkt. Ein Beispiel solcher Beschränkungen ist die Monotoniebeschränkung, welche dafür eingesetzt wird, daß die Bewegungsvektoren von Bildpunkten innerhalb eines Objekts eine monotone Funktion bilden. Dies ist auf die Annahme zurückzuführen, daß alle Bildpunkte eines Objekt ähnliche Bewegungsvektorwerte aufweisen, da die Position des Objekts sich ja auch einheitlich ändert.

**DP-Verfahren mit dreidimensionalem Optimierungsraum.**

Das Problem der Bildverarbeitung bei der Bewegungsschätzung mittels dynamischer Programmierung besteht nun darin, daß zwischen zwei aufeinanderfolgenden Bildern ein Objekt in jede beliebige Richtung verschoben sein kann.

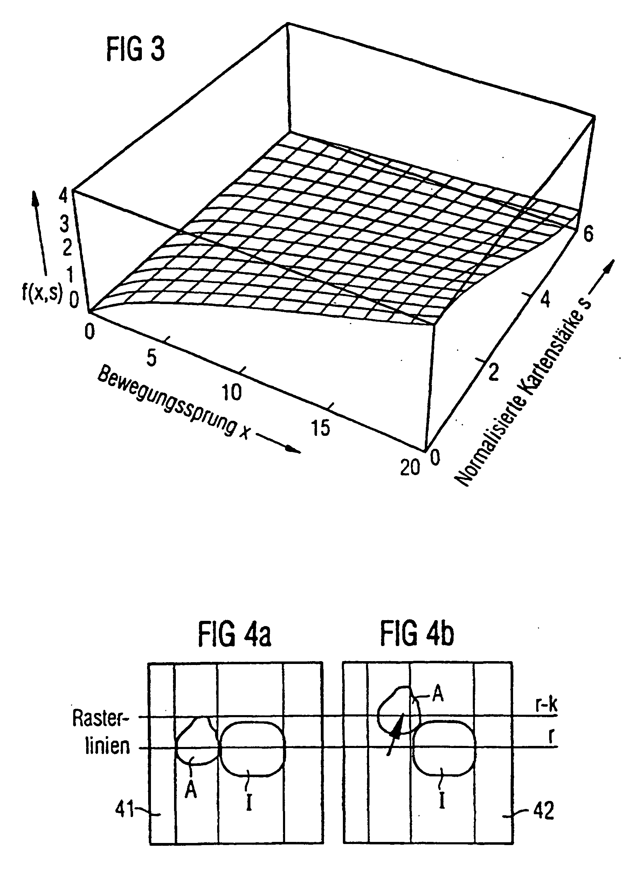

Damit ändert sich möglicherweise auch die Position eines Objektes zwischen zwei Bildern sehr schnell. Diese Problematik ist in den Figuren 4a und 4b dargestellt, in dem ein erstes Objekt A in einem zweiten Bild 42 bezogen auf ein erstes Bild 41 sowohl horizontal als auch vertikal verschoben ist.

Ein zweites Objekt B dagegen ist nicht vertikal verschoben.

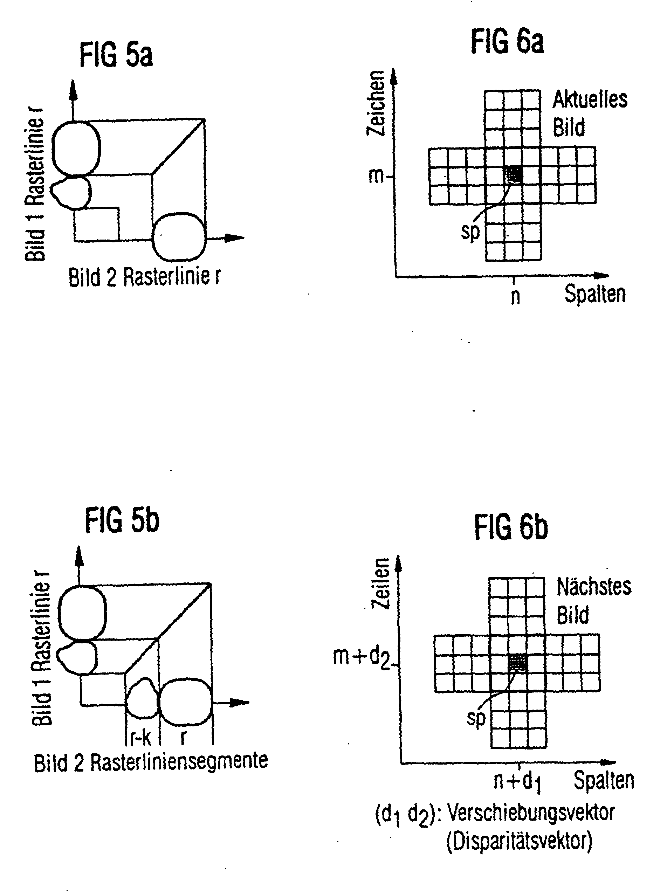

Wird nun eine Rasterlinie r als Scanlinie in dem dynamischen Programmierungs-Verfahren verwendet, um eine Übereinstimmung der Rasterlinie r des ersten Bildes 41 mit einem Bereich eines zweiten Bildes 42 zu erhalten, wird bei den bekannten Verfahren, wie in Figur 5a dargestellt, eine Übereinstimmungslücke ermittelt aufgrund der vertikalen Verschiebung des ersten Objektes A. Durch eine Linie P werden jeweils die Übereinstimmungspunkte, d.

h. die korrekt klassifizierten Bildpunkte mit den ihnen zugeordneten Bewegungsvektoreerten in der Figur 5a beschrieben.

An diesen Punkten kann bei den bekannten Verfahren keine Übereinstimmung zwischen den Luminanzwerten der Bildpunkte des ersten Bildes 41 und den Luminanzwerten der Bildpunkte des zweiten Bildes 42 ermittelt werden. Aus diesem Grund wird das Gebiet dieser Bildpunkte falsch als eine sog. Verdeckung klassifiziert. Diese vertikale Bewegung des ersten Objekts A wird durch folgendes Vorgehen kompensiert. Die Rasterlinie r wird in eine Vielzahl von Segmenten anderer Rasterlinien "aufgeteilt".

Als einfaches Beispiel ist in Figur 4b eine weitere Rasterlinie r-k dargestellt.

In Figur 5b ist das verbesserte Ergebnis, welches durch die Vielzahl von Segmenten mehrerer Rasterlinien dargestellt. Durch die Linie P werden wiederum jeweils die Übereinstimmungspunkte in der Figur 5b beschrieben.

In den Figuren 5a und 5b ist jeweils die Rasterlinie r des ersten Bildes 41 dargestellt. Diese ist zum einen der Rasterlinie r des zweiten Bildes 42 (Figur 5a) bzw. den einzelnen Segmenten der Rasterlinie r und der weiteren Rasterlinie r-k des zweiten Bildes 42 gemäß dem erfindungsgemäßen Verfahren (Figur 5b) gegenübergestellt.

Hierbei wird durch k jeweils die vertikale Verschiebung der weiteren Rasterlinie r-k gegenüber der Rasterlinie r bezeichnet.

Die Anzahl weiterer Rasterlinien, die jeweils vertikal gegenüber der Rasterlinie r verschoben sind, ist beliebig und anwendungsabhängig.

Die Optimierung der Bewertung C erfolgt nunmehr in einem dreidimensionalen Optimierungsraum nachfolgender Vorschrift:

$$C = \max\left( \sum_{n=0}^{N} P\left(n, d_1', d_2' \mid n-1, d_1, d_2\right) \cdot P\left(n, d_1', d_2'\right) \right) \qquad (4)$$

Hierbei bezeichnet $P(n, d_1', d_2' \mid n-1, d_1, d_2)$ die Wahrscheinlichkeit, daß ein Bildpunkt n auf der Scanlinie S den Bewegungsvektor $(d_1', d_2')$ aufweist unter der Bedingung, daß der benachbarte Bildpunkt n-1 den Bewegungsvektor $(d_1, d_2)$ aufweist. Mit $P(n, d_1', d_2')$ wird die Wahrscheinlichkeit bezeichnet, daß der Bildpunkt n den Bewegungsvektor $(d_1', d_2')$ aufweist.

Erfindungsgemäß wird das im vorigen Abstrakt beschriebene Vorgehen dadurch realisiert, daß der für das dynamischen Programmierungs-Verfahren verwendete Optimierungsraum um eine weitere Dimension erweitert wird.

Ebenso wird diese weitere Dimension des Optimierungsraums in der Ermittlung der jeweiligen Kostenfunktionen $T_n(d_1, d_2)$ für die einzelnen Bildpunkte n berücksichtigt. Dies bedeutet, daß einem Bildpunkt n entlang einer Rasterlinie zwei Werte zugewiesen werden, ein erster Bewegungsvektorwert $d_1$ für eine erste Richtung und ein zweiter Bewegungsvektorwert $d_2$ für eine zweite Richtung.

Hierbei wird die Regularisation jedoch nicht entlang der Scanlinie als Ganzes durchgeführt, sondern die Scanlinie wird in einzelne Segmente unterteilt abhängig davon, ob eine Kante eines Objekts detektiert wird oder nicht. Wenn ein Bildpunkt der Scanlinie als Kantenpunkt mit einem daraus resultierenden erhöhten Wert des Luminanzgradienten des jeweiligen Bildpunktes klassifiziert wird, wird der Einfluß des erhöhten Luminanzgradienten des Bildpunkts auf den Teil der Kostenfunktion des DP-Algorithmus, der zur Regularisation dient, "gedämpft". Dadurch wird die Scanlinie in Segmente aufgeteilt, die den einzelnen Objekten, die durch Kanten voneinander abgegrenzt sind, entsprechen.

Damit wird erreicht, daß die Regularisation (Monotonicity Constraint) nur innerhalb jedes Objekts stattfindet und somit Klassifizierungsfehler an Objektkanten vermieden werden

### Kostenfunktionen

Sind die einzelnen Wahrscheinlichkeiten und die einzelnen bedingten Wahrscheinlichkeiten für die jeweiligen Bildpunkte $s_p$ und die den Bildpunkten $s_p$ möglicherweise zugeordneten Bewegungsvektoren $(d_1, d_2)$ noch nicht bekannt, so können sie beispielsweise auf folgende Weise ermittelt werden.

Für jeden Bildpunkt $s_p$ wird für jede mögliche Verschiebung, also für alle möglichen ersten Bewegungsvektorwerte $d_1$ und alle möglichen zweiten Bewegungsvektorwerte $d_2$ die Kostenfunktion $T_n(d_1, d_2)$, die im Prinzip der bedingten Wahrscheinlichkeit, die im vorigen beschrieben wurde, entspricht, ermittelt nach folgender Vorschrift:

$$T_n(d_1, d_2) = NMC_n(d_1, d_2) = \frac{c}{N}\sqrt{\sum_{i=n-\tau}^{n+\tau}\sum_{j=m-\lambda}^{m+\lambda}\left(W_{F1}(i,j) - W_{F2}(i+d_1, j+d_2)\right)^2}$$

$$(5)$$

wobei

| | |
|---|---|
| n, m | Kordinatenwerte einzelner Bildpunkte $s_p$ beschreiben, |
| $d_1$ | den jeweils angenommenen ersten Bewegungsvektorwert beschreibt, |
| $d_2$ | den jeweils angenommenen zweiten Bewegungsvektorwert beschreibt, |
| $(d_1, d_2)$ | einen jeweils angenommenen Bewegungsvektor beschreibt, |
| $2\tau+1$ | die Größe des Gebiets in der ersten Richtung in Bildpunkten angibt, |
| $2\lambda+1$ | die Größe des Gebiets in der zweiten Richtung in Bildpunkten angibt, |
| N | eine Anzahl der sich in dem Gebiet befindenden Bildpunkte angibt, |
| c | eine Normalisierungskonstante beschreibt, |
| $W_{F1}(i,j)$ | einen Luminanzwert des zu codierenden Bildes an der Stelle (i, j) beschreibt, und |
| $W_{F2}(i,j)$ | einen Luminanzwert des zeitlich vorangegangenen Bildes an der Stelle (i, j) beschreibt. |

Diese Vorgehensweise der Bestimmung der Übereinstimmung von einem Bildpunkt $s_p$ des ersten Bildes mit einem Bildpunkt des zweiten Bildes wird als Blockmatching bezeichnet.

Bisher war es üblich, das Blockmatching nur in einer Richtung durchzuführen, was zu folgender "traditioneller" Kostenfunktion führte:

$$T_n(d) = NMC_n(d) = \frac{c}{N}\sqrt{\sum_{i=n-\tau}^{n+\tau}\sum_{j=m-\lambda}^{m+\lambda}\left(W_{F1}(i,j) - W_{F2}(i+d, j)\right)^2}$$

Hierbei wird mit dem Symbol d ein Bewegungsvektorwert in der einen untersuchten "Verschiebungsrichtung" des jeweiligen Bildpunktes bezeichnet.

Durch das erfindungsgemäße Verfahren wird diese "traditionelle" Kostenfunktion um einen zusätzlichen Summanden erweitert.

Diese Erweiterung sieht zwei Aspekte vor:

1. Die den Bildpunkten zugeordneten Bewegungsvektoren werden in einer Weise verstärkt, daß die Bewegungsvektoren innerhalb einer einheitlichen Fläche, also innerhalb eines zu klassifizierenden Objekts keine großen Unterschiede aufweisen, sondern daß zwischen den Bewegungsvektoren keine großen Sprünge auftreten (monotonicity constraint).

Diese Vorgehensweise ist bekannt (D. Geiger et al, Occlusions and Binocular stereo, Intern. Journal of Computer Vision, No. 14, Kluwer Accadamic Publishers, Boston, S. 211 bis 226, 1995).

2. Für Bildpunkte an Objektkanten wird der Wert der Kostenfunktion erniedrigt, damit ein Wechsel von Objekten bei der Klassifikation ermöglicht wird.

Dies ist möglich, da nun eine größere Änderung von Bewegungsvektorwerten benachbarter Bildpunkte, die allerdings unterschiedlichen Objekten "angehören", nicht in demselben Maße durch hohe Werte in der Kostenfunktion "bestraft" wird wie bei Bildpunkten, die sich innerhalb eines Objektes befinden und somit einen geringeren Luminanzgradienten aufweisen als Bildpunkte, die sich an Objektkanten befinden.

Es können unterschiedliche Funktionen in dem erfindungsgemäßen Verfahren verwendet werden, die dieser Überlegung Rechnung tragen.

Für den ersten Aspekt (siehe 1.) sind unterschiedliche Funktionen bekannt und deren Eigenschaften bezüglich der spezifischen Anforderungen sind untersucht worden in (D. Geiger et al, Occlusions and Binocular stereo, Intern. Journal of Computer Vision, No. 14, Kluwer Academic Publishers, Boston, S. 211 bis 226, 1995). Mögliche Funktionen sind außerdem in Figur 2 dargestellt.

Eine vorteilhafte Ausprägung der Funktion für den ersten Aspekt ergibt sich auf folgende Weise:

$$f(x) = \mu\sqrt{|x|} + \varepsilon|x|.$$

Für die Weiterbildugn des Verfahrens, in dem ein dreidimensionaler Suchbereich in dem DP-Verfahren eingesetzt wird, ergibt sich dann also:

$$f(x_1) = \mu\sqrt{|x_1|} + \varepsilon|x_1| , \qquad x_1 \geq 0, \qquad (6)$$

und/oder

$$f(x_2) = \mu\sqrt{|x_2|} + \varepsilon|x_2|, \qquad x_2 \geq 0, \qquad (6)$$

wobei

$x_1, x_2$     eine Differenzgröße der Bewegungsvektorwerte für die erste Richtung $d_1$ bzw. für die zweite Richtung $d_2$ zweier benachbarter Bildpunkte entlang der Scan-Linie S beschreibt,

$\mu, \varepsilon$     zwei empirisch bestimmte Konstanten beschreiben.

Die zwei imperisch bestimmten Konstanten $\mu$ und $\varepsilon$ weisen vorzugsweise die Werte $\mu = 0,3$ und $\varepsilon = 0,15$ auf.

Durch diesen weiteren Summanden wird also erreicht, daß die Bewegungsvektoren von Bildpunkten innerhalb eines Objekts eine monotone Funktion bilden (monotonicity constraint).

Der zweite im vorigen beschriebene Aspekt der Berücksichtigung von Objektkanten, der durch das erfindungsgemäße Verfahren erreicht wird, wird durch eine Funktion erreicht, die den Einfluß von f(x) bzw. $f(x_1, x_2)$ auf die Kostenfunktion abhänig von dem Luminanzgradienten des jeweiligen Bildpunktes regelt. Dies erfolgt auf die Weise, daß mit steigendem Luminanzgradienten der Wert der Funktion f(x) bzw. $f(x_1, x_2)$ gedämpft wird, d. h. erniedrigt wird.

Somit ergibt sich die Kostenfunktion für jeden Bildpunkt auf folgende Weise:

$$T_n(d) = NMC_n + f(x, s)$$

Im weiteren wird ein Beispiel beschriben, welchen Aufbau diese Funktion dann aufweist. Dieses Beispiel ist jedoch in keinster Weise einschränkend zu verstehen, sondern soll nur einen Eindruck vermitteln, welche Eigenschaft die Funktion aufweisen muß. Es ist weder von Bedeutung, daß im konkreten Fall eine Exponentialfunktion eingesetzt wird noch daß der normierte Luminanzgradient quadriert wird. Jede Funktion, die mit wachsendem Luminanzgradient ebenso steigt, ist in dem erfindungsgemäßen Verfahren einsetzbar.

Es hat sich als vorteilhaft herausgestellt, als zusätzlichen Summanden für die Kostenfunktion folgende Funktion zu verwenden:

$$f(x, s) = \frac{(\mu\sqrt{|x|} + \varepsilon|x|)}{e^{\beta s^2}}.$$

Für den Fall, daß ein dreidimensionale Optimierungsraum eingesetzt wird, ergibt sich dann:

$$f(x_1, s) = \frac{\left(\mu\sqrt{|x_1|} + \varepsilon|x_1|\right)}{e^{\beta s^2}} , \qquad x_1 \geq 0, s \geq 0, \qquad (7)$$

und/oder

$$f(x_2, s) = \frac{\left(\mu\sqrt{|x_2|} + \varepsilon|x_2|\right)}{e^{\beta s^2}} \quad , \qquad x_2 \geq 0, s \geq 0, \tag{7}$$

wobei

$x_1, x_2$    wiederum eine Differenzgröße der Bewegungsvektorwerte für die erste Richtung $d_1$ bzw. für die zweite Richtung $d_2$ zweier benachbarter Bildpunkte entlang der Scan-Linie S beschreibt,

$\mu, \varepsilon$    wiederum die zwei empirisch bestimmte Konstanten beschreiben,

$\beta$    eine Gradientenverstärkungskonstante beschreibt, und

$s$    einen normalisierten Luminanzgradienten für den jeweiligen Bildpunkt angibt.

Durch den Nenner $e^{\beta s^2}$ dieses zusätzlichen Summanden wird der Einfluß der Monotoniefunktion $\mu\sqrt{|x_1|} + \varepsilon|x_1|$ und/oder $\mu\sqrt{|x_2|} + \varepsilon|x_2|$ auf die Kostenfunktion $T_n(d_1, d_2)$ abhängig gemacht von der Änderung der Luminanz des jeweiligen Bildpunkts und somit wird erreicht, daß der Einfluß der Monotoniefunktion auf die Kostenfunktion $T_n(d_1, d_2)$ groß ist innerhalb von Objekten, aber nur gering an den Objektkanten.

An den Objektkanten wird damit der Einfluß der Monotoniefunktion $\mu\sqrt{|x_1|} + \varepsilon|x_1|$ und/oder $\mu\sqrt{|x_2|} + \varepsilon|x_2|$ auf die Kostenfunktion $T_n(d_1, d_2)$ reduziert, wodurch das dynamische Programmierungs-Verfahren in diesem Bereich für diesen Fall hauptsächlich den ersten Summanden $NMC_n(d_1, d_2)$ der Kostenfunktion $T_n(d_1, d_2)$ als Optimierungskriterium verwendet.

Da die Verwendung der Formel (5) in der Nähe von Objektkanten üblicherweise bessere Ergebnisse aufweist als innerhalb eines Objekts, wird die Verläßlichkeit der Kostenfunktion $T_n(d_1, d_2)$ an den Objektkanten erhöht und dadurch wird eine korrekte Klassifikation für den jeweiligen Bildpunkt und dem diesem Bildpunkt zugeordneten Bewegungsvektor $(d_1, d_2)$ erzielt ohne Einfluß der Monotoniefunktion.

Ein typisches Problem in diesem Anwendungsgebiet liegt in den Gebieten, in denen große Änderungen von Bewegungsvektoren zwischen zwei aufeinanderfolgende Bildpunkten entlang der Rasterlinie r aufgrund schneller Bewegung (große Verschiebung) eines Objekts auftauchen.

Würden die Kanten des jeweiligen Objekts nicht berücksichtigt, und nur die Formel (6) würde als zusätzlicher Summand in der Kostenfunktion berücksichtigt, würden die Gesamtkosten für den jeweiligen Bildpunkt im Rahmen des DP-Verfahrens für den angenommenen Bewegungsvektor an den Objektkanten sehr hoch werden und diese hohen Kosten würden dazu führen, daß ein Gebiet mit großer Bewegung als eine sogenannte Verdeckung interpretiert würde.

Zur Bestimmung des normalisierten Luminanzgradienten für den jeweiligen Bildpunkt kann jede beliebige Art von Gradientenfilter, die dem Fachmann geläufig sind, verwendet werden.

In diesem Ausführungsbeispiel soll jedoch die Verwendung des Sobel-Operators dargestellt werden. Der Luminanzgradient für eine Richtung K kann durch folgende Faltungsbeziehung ermittelt werden:

$$G_K(n,m) = F(n, m) \otimes H_K(n,m) \tag{8}$$

Hierbei bezeichnet $H_K(n, m)$ eine 3 x 3 Impulsantwortmatrix, die dazu verwendet wird, den jeweiligen Luminanzgradienten in den vier Richtungen, vertikale Richtung V, horizontale Richtung H, eine Richtung 45° von der Senkrechten nach links geneigt L sowie eine Richtung von 45° von der Senkrechten nach rechts geneigt R zu ermitteln. Die einzelnen Matrizen der Impulsantworten des Sobel-Operators sind im folgenden dargestellt.

Impulsantwortmatrix $H_H$ für die horizontale Richtung H:

$$H_H = \frac{1}{4}\begin{bmatrix} 1 & 0 & -1 \\ 2 & 0 & -2 \\ 1 & 0 & -1 \end{bmatrix}$$

Impulsantwortmatrix $H_V$ für die vertikale Richtung V:

$$H_V = \frac{1}{4} \begin{bmatrix} -1 & -2 & -1 \\ 0 & 0 & 0 \\ 1 & 2 & 1 \end{bmatrix}$$

Impulsantwortmatrix $H_L$ für die Richtung, 45° von der Senkrechten nach links geneigt L:

$$H_L = \frac{1}{4} \begin{bmatrix} -2 & -1 & 0 \\ -1 & 0 & 1 \\ 0 & 1 & 2 \end{bmatrix} .$$

Impulsantwortmatrix $H_R$ für die Richtung, 45° von der Senkrechten nach rechts geneigt R

$$H_R = \frac{1}{4} \begin{bmatrix} 0 & -1 & -2 \\ 1 & 0 & -1 \\ 2 & 1 & 0 \end{bmatrix} .$$

F(n,m) ist der Bereich des Bildes, der mit dem Sobel-Operator gefaltet wird. Für jede Richtung $K \in$ [H, V, R, L] wird ein Gradient $G_K(n, m)$ für den jeweiligen Bildpunkt (n, m) bestimmt.
Von den vier ermittelten Gradienten wird der maximale Wert $G_{max}$ (n, m) als der Gradient der Kante für den jeweiligen Bildpunkt (n, m) verwendet:

$$G_{max}(n, m) = \max(G_H(n, m), G_V(n, m), G_L(n, m), G_R(n, m)) \tag{9}$$

Dies bedeutet, daß sich der normalisierte Luminanzgradient s auf folgende Weise ergibt:

$$s = \frac{G_{max}(n, m)}{\omega} \tag{10}$$

Hierbei bezeichnet $\omega$ eine Normalisierungskonstante.
In Figur 3 ist der zusätzliche Summand dargestellt in Form einer zweidimensionalen Funktion f(x, s):
Diese Funktion kann in zwei unterschiedliche Gebiete unterteilt werden:

$$0 \leq s \leq 1: \quad e^{\beta s^2} \approx 1 \quad \Rightarrow \quad f(x,s) = \mu \sqrt{|x|} + \varepsilon |x| \quad x \geq 0 \tag{11}$$

Für 0 < s < 1 bedeutet die Formel (11), daß für den Fall, daß keine Objektkante bestimmt werden konnte oder daß nur ein sehr kleiner Luminanzgradient s ermittelt werden konnte, daß der zusätzliche Summand nur große Änderungen von Bewegungsvektoren "bestraft" und somit dafür sorgt, daß die Bewegungsvektoren, die Bildpunkten innerhalb eines Objektes zugeordnet werden, eine monotone Funktion ergeben.
Der zweite Bereich für $s \geq 1$ beschreibt die Gebiete, bei denen eine starke Kante festgestellt wurde. Damit wird der Einfluß dieser Funktion auf die Kostenfunktion reduziert um einen Sprung der Bewegungsvektoren benachbarter Bildpunkte zu "erlauben".
Für den zweiten Bereich $s \geq 1$ ergibt sich also:

$$s \geq 1: \qquad e^{\beta s^2} > 1 \qquad \Rightarrow \qquad f(x,s) = \frac{(\mu\sqrt{|x|} + \varepsilon|x|)}{e^{\beta s^2}} \qquad x \geq 0 \qquad\qquad (12)$$

Eine Gesamtkostenfunktion $TG_n(d_1, d_2)$ wird nun anhand der einzelnen Bildpunkte nach folgender rekursiven Vorschrift bestimmt:

$$TG_n(d_1,d_2) = NMC_n(d_1,d_2) + f(x_1,s) + f(x_2,s) + TG_{n-1}(d_{1_{best}},d_{2_{best}}) \qquad n > 1 \qquad (13)$$

$$TG_n(d_1,d_2) = NMC_n(d_1,d_2) \qquad n = 1 \qquad\qquad (13)$$

Hierbei bezeichnet der Term $TG_{n-1}(d_{1_{best}},d_{2_{best}})$ jeweils die beste Zuordnung von einem Bewegungsvektor $(d_{1_{best}},d_{2_{best}})$ für einen vorangegangenen Bildpunkt n-1. Dies entspricht dem prinzipiellen Vorgehen mit den im vorigen beschriebenen bedingten Wahrscheinlichkeit im Rahmen des DP-Verfahrens mit dem Unterschied, daß nicht die maximale Bewertung C gesucht wird, was einer maximalen Auftretenswahrscheinlichkeit entspricht, sondern daß in diesem Fall ein Minimum der Gesamtkostenfunktion $T_n(d_1, d_2)$ ermittelt wird, um die Gesamtkosten zu minimieren.

Dadurch wird eine optimale Zuordnung der Bewegungsvektoren zu den einzelnen Bildpunkten, die sich auf der jeweiligen Scanlinie S befinden, erzielt.

Das Gebiet, welches zur Berechnung der Kostenfunktion für den jeweiligen Bildpunkt verwendet wird, kann prinzipiell in beliebiger Weise ausgestaltet sein.

Es ist jedoch vorteilhaft, wenn das Gebiet entweder eine quadratische Form aufweist, oder auch eine Form, wie sie in Figur 6 dargestellt ist.

Bei diesem in Figur 6 dargestellten Gebiet ist der Vorteil der Form des Gebiets darin zu sehen, daß durch die Form die Übereinstimmungsergebnisse in der Nähe von Kanten eine verbesserte Verläßlichkeit aufweisen als bei vielen anderen Formen des zu verwendenden Gebiets.

Diese Form des Gebiets wird vorteilhafterweise gewählt, um in zwei ausgeprägten Richtungen, die aufeinander etwa senkrecht stehen, bessere Ergebnisse bei der Bewegungssschätzung zu erzielen. Aus diesem Grund hat das Gebiet in diesem speziellen Ausführungsbeispiel die Form eines Kreuzes.

Dies spezielle Form des Gebiets für das Ausführungsbeispiel schränkt jedoch die allgemeine Verwendbarkeit beliebiger Formen des Gebiets in keinster Weise ein.

Für jede mögliche Verschiebung in dem dreidimensionalen Suchbereich wird die Luminanzdifferenz gebildet, die weiterhin normalisiert wird durch die Division des Ergebnisses durch die Anzahl der Bildpunkte N, die sich in dem Gebiet befinden.

Dies entspricht prinzipiell der Wahrscheinlichkeit, daß ein Bildpunkt $s_p$ des ersten Bildes dem jeweils um den entsprechenden ersten Bewegungsvektorwert und den entsprechenden zweiten Bewegungsvektorwert verschobenen Bildpunkt in dem zweiten Bild entspricht (vergleiche Figur 6).

Für den Fall, daß die Kostenfunktion für den jeweiligen Bildpunkt den Wert Null aufweist, bedeutet dies, daß völlige Übereinstimmung zwischen den Luminanzwerten der zwei Gebiete des ersten Bildes bzw. des zweiten Bildes besteht. Für den Fall, daß die Kostenfunktion den Wert Eins aufweist, bedeutet dies eine völlige Nichtübereinstimmung der Luminanzwerte zwischen dem Gebiet in dem ersten Bild und dem um die entsprechenden Bewegungsvektorwerte verschobenen Gebiet des zweiten Bildes.

Hierin ist der einzige Unterschied der ermittelten Kostenfunktion $T_n(d_1, d_2)$ erkennbar, nämlich daß sich im Fall der Kostenfunktion für einen niedrigeren Wert eine um so höhere Wahrscheinlichkeit ergibt. Im Verfahren muß dies allerdings nicht gesondert berücksichtigt werde, nur insoweit, daß die Optimierung im DP-Verfahren eben nach einer minimalen Kostenfunktion durchgeführt wird.

In Figur 6a ist ein Bildpunkt $s_p$ mit den Bildpunktkoordinaten n, m und dem Gebiet, innerhalb dem die Kostenfunktion $T_n(d_1, d_2)$ für den Bildpunkt $s_p$ gebildet wird, dargestellt.

In Figur 6b ist das Gebiet dargestellt, verschoben um den Bewegungsvektor $(d_1, d_2)$. Dies bedeutet, daß die Übereinstimmung des Bildpunktes $s_p$ des ersten Bildes mit einem weiteren Bildpunkt $s_p'$ des zweiten Bildes untersucht wird, der in dem zweiten Bild gegenüber dem ersten Bild und den Bewegungsvektor $(d_1, d_2)$ verschoben wurde.

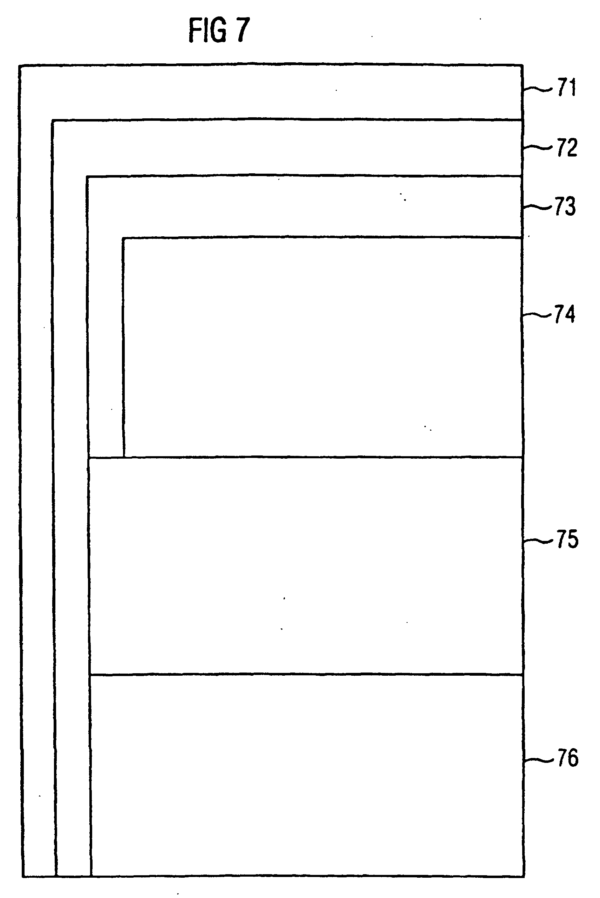

In Figur 7 ist das Verfahren in Form eines Ablaufdiagramms dargestellt.

In einem ersten Schritt werden iterativ für jedes Bild einer Videosequenz 71, für jede Scanlinie S des Bildes 72 folgende Verfahrensschritte durchgeführt.

Für jeden Bildpunkt, der sich auf der Scanlinie S befindet 73, wird die Kostenfunktion $T_n(d_1, d_2)$ ermittelt 74, entweder mit oder ohne zusätzlichen Summanden, wie oben beschrieben wurde.

Für die Bildpunkte einer Scanlinie S wird ein DP-Verfahren durchgeführt, wobei ein Gesamtpfad anhand einer minimalen Gesamtkostenfunktion $TG_n(d_1, d_2)$ ermittelt wird mit einem dreidimensionalen Optimierungsraum, der im vorigen beschrieben wurde 75.

In einem letzten Schritt 76 werden den Bildpunkten der Scanlinie S die durch das DP-Verfahren ermittelten Bewegungsvektorwerte zugeordnet.

Nachdem die Bewegungsschätzung durchgeführt wurde, können nun weiterhin die Bildpunkte zu Objekten klassifiziert werden und den Objekten ein Bewegungsvektor zugeordnet werden. Die Vorgehensweise hierbei ist jedem Fachmann geläufig.

Die Bilder werden nun unter Berücksichtigung der einzelnen Objekte und der Bewegungsvektoren zu einem Videodatenstrom kanalcodiert und an einen Empfänger über einen Kanal übertragen, wo der Videodatenstrom wiederum decodiert wird und das Bild rekonstruiert wird. Auch diese Vorgehensweisen sind dem Fachmann hinlänglich bekannt.

Das erfindungsgemäße Verfahren ist ein Verfahren der Bildverarbeitung und wird notwendigerweise von mindestens einem Rechner durchgeführt.

**Patentansprüche**

1. Verfahren zur rechnergestützten Bewegungsschätzung für Bildpunkte (sp) zeitlich aufeinanderfolgender Bilder einer Videosequenz,

   - bei dem für jeden Bildpunkt (sp) eines zu codierenden Bildes ein Luminanzgradient ermittelt wird,
   - bei dem für jeden Bildpunkt (sp) eines zu codierenden Bildes eine Kostenfunktion ermittelt wird,

   wobei die Kostenfunktion mindestens einen ersten Term aufweist, der die Übereinstimmung von Luminanzwerten von Bildpunkten (sp) eines Gebiets des zu codierenden Bilds mit Luminanzwerten von Bildpunkten (sp) eines Gebiets gleicher Form eines zeitlich vorangegangenen Bildes, das gegenüber dem Gebiet des zu codierenden Bildes verschoben ist, angibt, und durch den der Wert der Kostenfunktion entsprechend den Unterschieden von Werten der Bewegungsvektoren von Bildpunkten (sp), die sich nebeneinander auf einer Scan Linie (r) befinden, erhöht wird,

   - bei dem anhand der Kostenfunktion für jeden Bildpunkt (sp) eine Dynamische Programmierung durchgeführt wird, und
   - bei dem ein durch die Dynamische Programmierung ermittelter Bewegungsvektor dem Bildpunkt (sp) zugeordnet wird,

   **dadurch gekennzeichnet,**
   **dass** die Kostenfunktion mindestens einen zweiten Term aufweist, durch den der Wert der Kostenfunktion erniedrigt wird bei wachsendem Luminanzgradienten.

2. Verfahren nach Anspruch 1,
   bei dem sich das Gebiet über mehrere Bildpunkte (sp) in einer ersten Richtung und/oder in einer zweiten Richtung erstreckt.

3. Verfahren nach Anspruch 1 oder 2,
   bei dem das Gebiet rechteckige oder quadratische Form aufweist.

4. Verfahren nach einem der Ansprüche 1 bis 3,

   - bei dem sich die Kostenfunktion ergibt aus:

$$T_n(d) = NMC_{n,m}(d) + \frac{\left(\mu\sqrt{|x|} + \varepsilon|x|\right)}{e^{\beta x^2}}$$

mit

$$NMC_n(d) = \frac{c}{N}\sqrt{\sum_{i=n-\tau}^{n+\tau}\sum_{j=m-\lambda}^{m+\lambda}\left(W_{F1}(i,j) - W_{F2}(i+d,j)\right)^2}$$

wobei

| | |
|---|---|
| n, m | Kordinatenwerte einzelner Bildpunkte (sp) beschreibt, |
| d | den jeweils angenommenen Bewegungsvektorwert beschreibt, |
| $2\tau+1$ | die Größe des Gebiets in einer ersten Richtung in Bildpunkten (sp) angibt, |
| $2\lambda+1$ | die Größe des Gebiets in einer zweiten Richtung in Bildpunkten (sp) angibt, |
| N | eine Anzahl der sich in dem Gebiet befindenden Bildpunkte (sp) angibt, |
| c | eine Normalisierungskonstante beschreibt, |
| $W_{F1}(i,j)$ | einen Luminanzwert des zu codierenden Bildes an der Stelle (i, j) beschreibt, und |
| $W_{F2}(i,j)$ | einen Luminanzwert des zeitlich vorangegangenen Bildes an der Stelle (i, j) beschreibt, |
| x | eine Differenzgröße der Bewegungsvektorwerte die Richtung zweier benachbarter Bildpunkte (sp) entlang der Scan-Linie (r) beschreibt, |
| $\mu, \varepsilon$ | zwei empirisch bestimmte Konstanten beschreiben, |
| $\beta$ | eine Gradientenverstärkungskonstante beschreibt, und |
| s | einen normalisierten Luminanzgradienten für den jeweiligen Bildpunkt (sp) angibt. |

5. Verfahren nach einem der Ansprüche 1 bis 3,

  - bei dem für die Dynamische Programmierung mindestens folgende drei Suchbereiche verwendet werden:

    -- eine Scan-Linie (r) , entlang der die Bewegungsschätzung durchgeführt wird,
    -- erste Bewegungsvektorwerte ($d_1$) für den Bildpunkt (sp) für eine erste Richtung,
    -- zweite Bewegungsvektorwerte ($d_2$) für den Bildpunkt (sp) für eine zweite Richtung, und

  - bei dem ein durch die Dynamische Programmierung ermittelter erster Bewegungsvektor und ein durch die Dynamische Programmierung ermittelter zweiter Bewegungsvektor dem Bildpunkt (sp) zugeordnet werden.

6. Verfahren nach einem der Ansprüche 1 bis 5,
   bei dem sich die Kostenfunktion $T_n(d_1, d_2)$ ergibt aus:

$$T_n(d_1,d_2) = NMC_{n,m}(d_1,d_2) + f(x,s)$$

mit

$$NMC_n(d_1,d_2) = \frac{c}{N}\sqrt{\sum_{i=n-\tau}^{n+\tau}\sum_{j=m-\lambda}^{m+\lambda}(W_{F1}(i,j) - W_{F2}(i+d_1,j+d_2))^2}$$

und

$$f(x, s) = f(x_1,s) = \frac{\left(\mu\sqrt{|x_1|} + \varepsilon|x_1|\right)}{e^{\beta s^2}} , \qquad x_1 \geq 0, s \geq 0,$$

oder

$$f(x,\ s)\ =\ f(x_2,s) = \frac{\left(\mu\sqrt{|x_2|} + \varepsilon|x_2|\right)}{e^{\beta\lambda^2}}\ , \qquad x_2 \geq 0, s \geq 0 ,$$

oder

$$f(x, s) = f(x_1, s) + f(x_2, s)$$

wobei

| | |
|---|---|
| n, m | Kordinatenwerte einzelner Bildpunkte (sp) beschreibt, |
| $d_1$ | den jeweils angenommenen ersten Bewegungsvektorwert beschreibt, |
| $d_2$ | den jeweils angenommenen zweiten Bewegungsvektorwert beschreibt, |
| $(d_1, d_2)$ | einen jeweils angenommenen Bewegungsvektor beschreibt, |
| $2\tau+1$ | die Größe des Gebiets in der ersten Richtung in Bildpunkten (sp) angibt, |
| $2\lambda+1$ | die Größe des Gebiets in der zweiten Richtung in Bildpunkten (sp) angibt, |
| N | eine Anzahl der sich in dem Gebiet befindenden Bildpunkte (sp) angibt, |
| c | eine Normalisierungskonstante beschreibt, |
| $W_{F1}(i, j)$ | einen Luminanzwert des zu codierenden Bildes an der Stelle (i, j) beschreibt, und |
| $W_{F2}(i, j)$ | einen Luminanzwert des zeitlich vorangegangenen Bildes an der Stelle (i, j) beschreibt. |
| $x_1, x_2$ | eine Differenzgröße der Bewegungsvektorwerte für die erste Richtung bzw. für die zweite Richtung zweier benachbarter Bildpunkte (sp) entlang der Scan-Linie (r) beschreibt, |
| $\mu, \varepsilon$ | zwei empirisch bestimmte Konstanten beschreiben, |
| $\beta$ | eine Gradientenverstärkungskonstante beschreibt, und |
| s | einen normalisierten Luminanzgradienten für den jeweiligen Bildpunkt (sp) angibt. |

7. Verfahren nach einem der Ansprüche 1 bis 6, bei dem zur Bildung des normalisierten Luminanzgradienten (s) ein Sobel-Filter verwendet wird.

**Claims**

1. A method for computer-aided motion estimation for pixels (sp) of chronologically successive images of a video sequence,

 - in which a luminance gradient is determined for each pixel (sp) of an image to be coded,
 - in which a cost function is determined for each pixel (sp) of an image to be coded,
   the cost function having at least one first term which specifies the matching between luminance values of pixels (sp) of a region of the image to be coded and luminance values of pixels (sp) of a region of the same form of a chronologically preceding image, which is displaced relative to the region of the image to be coded, and by which the value of the cost function is increased in accordance with the differences between values of the motion vectors of pixels (sp) which are situated beside one another on a scan line (r),
 - in which a dynamic programming is carried out using the cost function for each pixel (sp), and
 - in which a motion vector determined by the dynamic programming is assigned to the pixel (sp),

   *characterized*
   **in that** the cost function has at least one second term by which the value of the cost function is decreased with a rising luminance gradient.

2. The method as claimed in claim 1,
   in which the region extends over a plurality of pixels (sp) in a first direction and/or in a second direction.

3. The method as claimed in claim 1 or 2,
   in which the region has a rectangular or square form.

4.  The method as claimed in one of claims 1 to 3,

    -   in which the cost function results from:

$$T_n(d) = NMC_{n,m}(d) + \frac{\left(\mu\sqrt{|x|} + \varepsilon|x|\right)}{e^{\beta s^2}}$$

where

$$NMC_n(d) = \frac{c}{N}\sqrt{\sum_{i=n-\tau}^{n+\tau}\sum_{j=m-\lambda}^{m+\lambda}\left(W_{F1}(i,j) - W_{F2}(i+d,j)\right)^2}$$

where

| | |
|---|---|
| n,m | denote coordinate values of individual pixels (sp), |
| d | denotes the motion vector value assumed in each case, |
| $2\tau+1$ | specifies the size of the region in a first direction in pixels (sp), |
| $2\lambda+1$ | specifies the size of the region in a second direction in pixels (sp), |
| N | specifies a number of the pixels (sp) situated in the region, |
| c | denotes a normalization constant, |
| $W_{F1}(i, j)$ | denotes a luminance value of the image to be coded at the location (i, j), and |
| $W_{F2}(i, j)$ | denotes a luminance value of the chronologically preceding image at the location (i, j), |
| x | denotes a differential quantity of the motion vector values for the direction of two adjacent pixels (sp) along the scan line (r), |
| $\mu, \varepsilon$ | denote two empirically determined constants, |
| $\beta$ | denotes a gradient amplification constant, and |
| s | specifies a normalized luminance gradient for the respective pixel (sp). |

5.  The method as claimed in one of claims 1 to 3,

    -   in which at least the following three search regions are used for the dynamic programming:

        --   a scan line (r) along which the motion estimation is carried out,
        --   first motion vector values ($d_1$) for the pixel (sp) for a first direction,
        --   second motion vector values ($d_2$) for the pixel (sp) for a second direction, and

    -   in which a first motion vector determined by the dynamic programming and a second motion vector determined by the dynamic programming are assigned to the pixel (sp).

6.  The method as claimed in one of claims 1 to 5,
    in which the cost function $T_n(d_1, d_2)$ results from:

$$T_n(d_1,d_2) = NMC_{n,m}(d_1,d_2) + f(x,s)$$

where

$$NMC_n(d_1,d_2) = \frac{c}{N}\sqrt{\sum_{i=n-\tau}^{n+\tau}\sum_{j=m-\lambda}^{m+\lambda}(W_{F1}(i,j) - W_{F2}(i+d_1,j+d_2))^2}$$

and

$$f(x,\ s)\ =\ f(x_1,s) = \frac{\left(\mu\sqrt{|x_1|} + \varepsilon|x_1|\right)}{e^{\beta s^2}}\ ,\qquad x_1 \geq 0, s \geq 0,$$

or

$$f(x,\ s)\ =\ f(x_2,s) = \frac{\left(\mu\sqrt{|x_2|} + \varepsilon|x_2|\right)}{e^{\beta s^2}}\ ,\qquad x_2 \geq 0, s \geq 0,$$

or

$$f(x, s) = (fx_1, s) + F(x_2, s)$$

where

| | |
|---|---|
| n, m | denote coordinate values of individual pixels (sp), |
| $d_1$ | denotes the first motion vector value assumed in each case, |
| $d_2$ | denotes the second motion vector value assumed in each case, |
| $(d_1, d_2)$ | denotes a motion vector assumed in each case, |
| $2\tau+1$ | specifies the size of the region in the first direction in pixels (sp), |
| $2\lambda+1$ | specifies the size of the region in the second direction in pixels (sp), |
| N | specifies a number of the pixels (sp) situated in the region, |
| c | denotes a normalization constant, |
| $W_{F1}(i, j)$ | denotes a luminance value of the image to be coded at the location (i, j), and |
| $W_{F2}(i, j)$ | denotes a luminance value of the chronologically preceding image at the location (i, j), |
| $x_1, x_2$ | denotes a differential quantity of the motion vector values for the first direction and for the second direction, respectively, of two adjacent pixels (sp) along the scan line (r), |
| $\mu, \varepsilon$ | denote two empirically determined constants, |
| $\beta$ | denotes a gradient amplification constant, and |
| s | specifies a normalized luminance gradient for the respective pixel (sp). |

**7.** The method as claimed in one of claims 1 to 6, in which a Sobel filter is used for forming the normalized luminance gradient (s).

**Revendications**

**1.** Procédé pour l'évaluation de mouvement assisté par ordinateur pour des points d'image (sp) d'images se succédant dans le temps d'une séquence vidéo,

- avec lequel on détermine un gradient de luminance pour chaque point d'image (sp) d'une image à coder,

- avec lequel on détermine une fonction de coût pour chaque point d'image (sp) d'une image à coder, moyennant quoi la fonction de coût présente au moins un premier terme qui indique la concordance de valeurs de luminance de points d'image (sp) d'une zone de l'image à coder avec des valeurs de luminance de points d'image (sp) d'une zone de forme identique d'une image précédente dans le temps, qui est décalée par rapport à la zone de l'image à coder, terme par lequel la valeur de la fonction de coût est augmentée en fonction des écarts de valeurs des vecteurs de mouvement de points d'image (sp) qui se trouvent les uns à côté des autres sur une ligne de balayage (r),
- avec lequel on effectue une programmation dynamique à l'aide de la fonction de coût pour chaque point d'image (sp), et
- avec lequel un vecteur de mouvement déterminé par la programmation dynamique est attribué au point d'image (sp),

  **caractérisé en ce que** la fonction de coût présente au moins un deuxième terme, par lequel la valeur de la fonction de coût est abaissée avec un gradient de luminance croissant.

2. Procédé selon la revendication 1, avec lequel la zone s'étend sur plusieurs points d'image (sp) dans une première direction et/ou dans une deuxième direction.

3. Procédé selon la revendication 1 ou 2, avec lequel la zone présente une forme rectangulaire ou carrée.

4. Procédé selon l'une quelconque des revendications 1 à 3,

   - avec lequel la fonction de coût est obtenue de la façon suivante :

$$T_n(d) = NMC_{n,m}(d) + \frac{\left(\mu\sqrt{|x|} + \varepsilon|x|\right)}{e^{\beta s^2}}$$

avec

$$NMC_n(d) = \frac{c}{N}\sqrt{\sum_{i=n-\tau}^{n+\tau}\sum_{j=m-\lambda}^{m+\lambda}(W_{F1}(i,j) - W_{F2}(i+d,j))^2}$$

Où,
n, m décrivent les valeurs de coordonnées de points d'image (sp) individuels,
d décrit la valeur respectivement admise du vecteur de mouvement,
$2\tau+1$ désigne la grandeur de la zone dans une première direction dans des points d'image (sp),
$2\lambda+1$ désigne la grandeur de la zone dans une deuxième direction dans des points d'image (sp);
N indique un nombre des points d'image se trouvant dans la zone,
c décrit une constante de normalisation,
$W_{F1}(i,j)$ décrit une valeur de luminance de l'image à coder à l'emplacement (i, j) et
$W_{F2}(i,j)$ décrit une valeur de luminance de l'image précédente dans le temps à l'emplacement (i, j),
x décrit une différence des valeurs de vecteur de mouvement qui décrit la direction de deux points d'image (sp) voisins le long de la ligne de balayage (r),
$\mu$, $\varepsilon$ décrivent deux constantes déterminées de façon empirique,
$\beta$ décrit une constante d'amplification de gradient et
s indique un gradient de luminance normalisé pour le point d'image (sp) respectif.

5. Procédé selon l'une quelconque des revendications 1 à 3,

   - avec lequel les trois zones de recherche suivantes sont utilisées pour la programmation dynamique :

     -- une ligne de balayage (r) le long de laquelle on effectue l'évaluation du mouvement,

-- les premières valeurs de vecteur de mouvement ($d_1$) pour le point d'image (sp) pour une première direction,

-- des secondes valeurs de vecteur de mouvement ($d_2$) pour le point d'image (sp) pour une deuxième direction, et

- avec lequel un premier vecteur de mouvement calculé par la programmation dynamique et un deuxième vecteur de mouvement déterminé par la programmation dynamique sont attribués aux points d'image (sp).

**6.** Procédé selon l'une quelconque des revendications 1 à 5, avec lequel la fonction de coût $T_n(d_1, d_2)$ est obtenue à partir de :

$$T_n(d_1, d_2) = NMC_{n,m}(d_1,d_2) + f(x,s)$$

avec

$$NMC_n(d_1, d_2) = \frac{c}{N} \sqrt{\sum_{i=n-\tau}^{n+\tau} \sum_{j=m-\lambda}^{m+\lambda} (W_{F1}(i, j) - W_{F2}(i + d_1, j + d_2))^2}$$

et

$$f(x,s) = f(x_1,s) = \frac{\left(\mu\sqrt{|x_1|} + \varepsilon|x_1|\right)}{e^{\beta s^2}} \qquad x_1 \geq 0, s \geq 0,$$

ou

$$f(x,s) = f(x_2,s) = \frac{\left(\mu\sqrt{|x_2|} + \varepsilon|x_2|\right)}{e^{\beta s^2}} \qquad x_2 \geq 0, s \geq 0,$$

ou

$$f(x,s) = f(x_1, s) + f(x_2, s)$$

et où
n, m décrivent les valeurs de coordonnées de points d'image (sp) individuels,
$d_1$ décrit la première valeur respectivement admise du vecteur de mouvement,
$d_2$ décrit la seconde valeur respectivement admise du vecteur de mouvement
($d_1$, $d_2$) décrit un vecteur de mouvement respectivement admis
$2\tau+1$ décrit la grandeur de la zone dans la première direction dans des points d'image (sp),
$2\lambda+1$ indique la grandeur de la zone dans la deuxième direction dans des points d'image (sp),
N indique un nombre des points d'image se trouvant dans la zone,
c décrit une constante de normalisation,
$W_{F1}(i,j)$ décrit une valeur de luminance de l'image à coder à l'emplacement (i, j) et
$W_{F2}(i,j)$ décrit une valeur de luminance de l'image précédente dans le temps à l'emplacement (i, j),
$x_1$, $x_2$ décrit une grandeur de différence des valeurs de vecteur de mouvement pour la première direction ou
pour la deuxième direction de deux points d'image (sp) voisins le long de la ligne de balayage (r),
$\mu$, $\varepsilon$ décrivent deux constantes déterminées de façon empirique,
$\beta$ décrit une constante d'amplification de gradient et
s indique un gradient de luminance normalisé pour le point d'image (sp) respectif.

7. Procédé selon l'une quelconque des revendications 1 à 6, avec lequel on utilise un filtre de Sobel pour la formation du gradient de luminance (s) normalisé.

## FIG 1

Bewegungsvektorwert d

P(1,4)  P(2,4)  P(3,4)  P(4,4)

P(4,4/3,3)

P(1,3)  P(2,3)  P(3,3)  P(4,3)

P(1,2)  P(2,2)  P(3,2)  P(4,2)

P(1,1)  P(2,1)  P(3,1)  P(4,1)

Scanlinie S

## FIG 2

f(x)

$\sqrt{|x|}$

|x|

$0,3\sqrt{|x|}+0,15|x|$

$\ln(1+e)-\ln(1+e^{1-x^2})$

Verschiedene Möglichkeiten für die Kostenfuktion f(x)

x

FIG 3

$f(x,s)$

Bewegungssprung x ⟶

Normalisierte Kartenstärke s ⟶

FIG 4a          FIG 4b

Rasterlinien

r-k

r

41          42

A          A

I          I

## FIG 5a

Bild 1 Rasterlinie r

Bild 2 Rasterlinie r

## FIG 6a

Zeichen

m —

sp

n    Spalten

Aktuelles
Bild

## FIG 5b

Bild 1 Rasterlinie r

r-k | r

Bild 2 Rasterliniensegmente

## FIG 6b

Zeilen

$m+d_2$ —

sp

$n+d_1$    Spalten

Nächstes
Bild

$(d_1\ d_2)$: Verschiebungsvektor
(Disparitätsvektor)

## FIG 7